# FASCICULE DE BREVET EUROPEEN

(11) **EP 1 493 476 B1**
(45) Date de publication et mention de la délivrance du brevet: **31.05.2006**
(21) Numéro de dépôt: 04291545.4
(22) Date de dépôt: 18.06.2004
(51) Int. Cl.: B01D 15/08, B01D 53/04

(54) **Procédé de récupération de tensioactifs fluorés par du charbon actif**
Verfahren zur Rückgewinnung von fluorhaltigen Tensiden durch Aktivkohle
Process for recovering fluorinated surfactants by activated carbon

(30) Priorité: 02.07.2003 FR 0308033
(43) Date de publication de la demande: 05.01.2005
(73) Titulaire: Arkema, 92800 Puteaux (FR)
(72) Inventeur: Le Bec, Rémi, 64170 La bastide Cerezacq (FR)
(74) Mandataire: Neel, Henry

(56) Documents cités:
- EP-A- 1 193 242
- WO-A-02/062742
- DE-A- 19 933 696
- US-A- 4 282 162
- PRESCHER D ET AL: "ZUM UMWELTVERHALTEN VON FLUORTENSIDEN. TEIL 3: REINIGUNG DER INDUSTRIELLEN ABWAESSER" 1986, ACTA HYDROCHIMICA ET HYDROBIOLOGICA, VCH, WEINHEIM, DE, PAGE(S) 293-304 , XP009027718 ISSN: 0323-4320 * page 297, dernier alinéa - page 301, ligne 10; tableau 2 *

## Description

La présente invention concerne un procédé de récupération de tensioactifs fluorés par du charbon actif, plus précisément des tensioactifs qui sont utilisés pour la synthèse des polymères fluorés.

Les polymères fluorés sont généralement fabriqués en émulsion ou en suspension dans l'eau. On réalise dans un réacteur agité une dispersion des monomères dans l'eau à l'aide d'un tensioactif puis on ajoute un agent de transfert de chaîne et un initiateur. On effectue la polymérisation puis on sépare par tout moyen le polymère fluoré (il est sous forme de particules solides) et l'eau.

Selon la nature du tensioactif et ses proportions le procédé est dit "en émulsion", "en suspension" ou tous autres procédés dérivés de l'émulsion ou de la suspension (microsuspension, miniémulsion...). Après la fin de la polymérisation on sépare le polymère fluoré de l'eau et des restes éventuels des réactifs engagés.

Dans le cas des procédés type suspension, le polymère fluoré se présente sous la forme d'une dispersion granulaire dont la taille moyenne des grains permet de réaliser directement une filtration et un lavage, par exemple par passage d'eau pure dans le système de filtration.

Dans le cas des procédés type émulsion, le polymère se présente sous la forme d'un latex composé de particules très fines, dont le diamètre moyen est généralement inférieur à 1 micron. Ce latex peut être coagulé et éventuellement concentré en éliminant une partie de l'eau par exemple par centrifugation. Dans l'état coagulé, il est également possible d'obtenir une crème aérée moins dense que l'eau qu'on peut laver avec de l'eau déionisée selon des techniques déjà décrites par l'art antérieur (brevets US 4,218,517 et EP 0 460 284). Puis on peut sécher la crème lavée en la mettant au contact d'un gaz chaud dans un atomiseur et on recueille le polymère fluoré en poudre.

Dans tous ces procédés on obtient comme sous produit de l'eau, mais aussi un évent gazeux, pouvant contenir des résidus de fabrication tels que des tensioactifs fluorés, éventuellement des traces de solvant et des impuretés solides diverses en suspension. L'invention concerne la récupération de ces tensioactifs. Cette récupération est souhaitable d'abord parce que ces tensioactifs pourraient être dangereux pour l'environnement et aussi à cause de leur prix élevé. Parmi les tensioactifs fluorés l'invention concerne plus particulièrement le perfluorooctanoate d'ammonium.

### L'art antérieur et le problème technique

Le brevet **US 3882153** décrit le passage de solutions aqueuses de tensioactifs fluorés sur des résines échangeuses d'ions. Les tensioactifs fluorés sont retenus sur la résine. Le brevet **US 4282162** décrit un procédé similaire au précédent mais en plus décrit l'élution par un acide minéral (HCl) et un solvant (le méthanol) pour régénérer la résine et récupérer le tensioactif. Le brevet **CA 2334105** décrit un procédé pour isoler des tensioactifs fluorés contenus dans de l'eau résiduaire. On élimine d'abord de cette dernière les solides très fins et/ou les fractions transformables en solides, de préférence par précipitation, on met ensuite en contact l'eau résiduaire avec une résine échangeuse d'ions et on élue à partir de celle ci les tensioactifs fluorés. Le brevet **CA 2334023** décrit un procédé similaire sauf que dans l'étape préliminaire on n'élimine pas les solides très fins mais qu'on les stabilise avec un autre tensioactif non ionique, donc non retenu sur la résine, et qui permettrait d'éviter un colmatage de la colonne de résine par les particules solides. Le brevet **US 6436244** décrit un procédé d'élution de tensioactifs fluorés après leur adsorption sur une résine.

La publication de D. Prescher et al, Umweltverhalten von fluortensiden dans **Acta hydrochim. hydrobiol. 14(3) (1986) pages 293-304** décrit l'élimination de tensioactifs contenus dans les eaux résiduaires par mise en contact avec du charbon actif ou des résines échangeuses d'ions. Par exemple on opère en discontinu en mettant l'eau résiduaire dans une cuve munie d'un agitateur puis en y ajoutant le charbon actif en poudre et on agite pendant 30 minutes. Il est aussi décrit un procédé continu par passage des eaux résiduaires sur du charbon actif en granulés ou des résines échangeuses d'ions. On constate une bonne adsorption des tensioactifs de type perfluoroalkanoates de sodium sur le charbon actif en poudre et dix à 30 fois plus faible (c'est à dire qu'on adsorbe 10 à 30 fois moins de tensioactif par gramme de charbon) sur le charbon en granulés. Aucune élution n'est décrite et a fortiori aucune régénération du charbon ni du tensioactif en vue de leur réutilisation ne sont décrits.

On a maintenant trouvé qu'on pouvait éliminer complètement les tensioactifs du type perfluoroalkanoates d'ammonium contenus dans des eaux résiduaires ou des évents gazeux en passant ces eaux ou ces évents sur du charbon actif en granulés puis qu'on pouvait les éluer et les régénérer ainsi que le charbon actif.

### Brève description de l'invention

La présente invention concerne un procédé de récupération de tensioactif fluoré présent soit dans une solution aqueuse soit dans un évent gazeux soit à la fois dans une solution aqueuse et dans un évent gazeux dans lequel :
a1) la solution aqueuse comprend :
   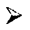 1 à 1000 ppm du tensioactif,
   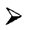 0 à 1000 ppm de solvants exprimé en DCO (demande chimique en oxygène),
   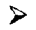 0 à 1000 ppm de solides en suspension,
a2) l'évent gazeux constitué essentiellement d'air comprend :
   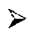 1 à 1000 ppm de tensioactif,
   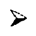 1 à 10 % volumique d'eau,
   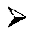 1 à 1000 ppm de solides,
b1) la solution de l'étape a1) est filtrée et/ou clarifiée pour éliminer les solides en suspension,
b2) l'évent de l'étape a2) est éventuellement passé dans un filtre pour éliminer les particules solides,
c1) la solution de l'étape b1) est éventuellement concentrée,
d) puis la solution aqueuse passe sur un lit fixe (L1) de charbon actif en granulés tel que tout le tensioactif est adsorbé sur (L1) sans que les solvants ne soient adsorbés, l'évent gazeux sur un autre lit fixe (L2) de charbon actif en granulés tel que tout le tensioactif est adsorbé sur (L2),
e) puis on arrête le passage de la solution sur (L1), et de l'évent gazeux sur (L2) et on élue (L1) et (L2) avec une solution comprenant un solvant et un acide minéral,
f) puis cette solution récupérée à l'étape e) est traitée pour régénérer le tensioactif fluoré.

### Description détaillée de l'invention

**S'agissant du tensioactif fluoré,** on utilise avantageusement un tensioactif ionique dérivé d'un acide ou d'une base organique. Les brevets US 4025709, US 4569978, US 4360652, EP 626396 et EP 0655468 décrivent les procédés de synthèse du PVDF (polyfluorure de vinylidène) par mise en émulsion aqueuse du VDF (fluorure de vinylidène) et sa polymérisation, on y trouve de nombreuses formules de tensioactifs.

A titre d'exemple on peut citer ceux de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

On peut encore citer les perfluoroalkanoates de lithium de formule F₃C(CF₂)ₙ₋₂CO₂Li où n = 7, 8, 9 et 10.

Avantageusement on utilise le perfluorooctanoate d'ammonium et le perfluorononanoate d'ammonium ou leur mélanges, c'est à dire le produit de formule ZCₙF₂ₙCOOM dans laquelle Z est F, M l'ammonium et n moyen est compris entre 7 et 8.

**S'agissant de la solution de l'étape a1)** la concentration de tensioactif est avantageusement comprise entre 10 et 200 ppm et de préférence entre 20 et 100 ppm. La concentration de solvants est habituellement comprise entre 0 et 500 ppm et le plus souvent de l'ordre de 200 à 500 ppm. La teneur de solides en suspension est habituellement comprise entre 0 et 500 ppm et le plus souvent de l'ordre de 200 à 500 ppm.

**S'agissant de l'étape b1)** on utilise tout procédé connu et/ou dispositif de filtration/clarification. A titre d'exemple on peut citer la coagulation avec 100mg/l (de la solution) de Claral® (forme de polychlorure d'aluminium), puis floculation avec 5 mg/l de floculant cationique fort (par exemple le EM840 L de Floerger®), puis décantation.

**S'agissant de l'étape b2)** on utilise avantageusement un filtre à manches.

**S'agissant de l'étape c1)** on peut utiliser tout dispositif connu de concentration. Avantageusement on utilise l'osmose inverse. On obtient une concentration de 10 à 20 fois, aussi bien des tensioactifs que des solvants.

**S'agissant de l'étape d)** et de la solution aqueuse on peut utiliser tout dispositif de mise en contact d'un liquide avec une substance en lit fixe. Ce dispositif est connu en lui même. Le temps de contact (rapport du volume du lit sur le débit volumique horaire de la solution) est d'au moins 0,06 heure et peut être plus élevé. De plus, il est recommandé que la vitesse linéaire de la solution (débit de la solution divisée par la section de colonne) soit comprise entre 1 et 10 m/h, et que la hauteur minimale de lit soit de 0.5 m. En pratique la hauteur du lit est d'au moins 2 à 3 m pour avoir une autonomie suffisante entre 2 régénérations.

Le charbon actif peut être préparé à partir de matières carbonées puis éventuellement être aggloméré. Les charbons actifs sont des produits résultant de la carbonisation de matières carbonées diverses, d'origine minérale (houille, lignite etc..), végétale (bois, noix de coco, écorce , tourbe, etc...), ou même polymérique, ayant subi un traitement d'activation à la vapeur d'eau vers 900-1000°C (activation physique), qui leur confère une forte porosité et un grand pouvoir adsorbant. Ces propriétés adsorbantes ont été exploitées depuis longtemps pour le traitement, la séparation ou l'épuration de gaz ainsi que pour la décoloration, l'épuration et la désodorisation de liquides.

Lorsqu'ils sont mis en contact avec des liquides dans des procédés discontinus, ils sont le plus souvent utilisés sous forme de poudres, de granulométrie moyenne en général inférieure à 100 µm car les poudres permettent de réaliser un contact intime charbon actif/liquide très efficace. Dans les procédés de traitement par percolation, le charbon actif est plutôt utilisé sous forme de bûchettes ou de granulés pour éviter tout mouvement intempestif de la couche d'adsorbant.

Lorsque le charbon actif est mis en contact avec des gaz (lits d'adsorbant), on évite les granulométries trop fines dont la perte de charge est trop élevée et qui augmentent les risques de colmatage des appareillages.

On peut aussi préparer le charbon actif par action d'un agent déshydratant et/ou oxydant (acide phosphorique, chlorure de zinc) sur des matériaux ligneux tels que bois, coques de noix de coco, houille) en opérant sans carbonisation préalable à une température relativement basse (inférieure à 600 °C), la substance chimique étant ensuite éliminée du charbon activé par lavages successifs et si nécessaire broyage à la granulométrie souhaitée. Les charbons actifs ainsi obtenus (dits chimiques) présentent une porosité plus large.

Une méthode de préparation de charbon actif aggloméré consiste à mélanger un matériau hydrocarboné tel que la houille, la tourbe, le coke de tourbe ou de lignite, le charbon de bois, avec du brai ou du goudron de houille ou de bois puis agglomérer le mélange par compactage et enfin le concasser, ou l'extruder au travers d'une filière à la granulométrie désirée. Les produits agglomérés sont ensuite dévolatilisés à une température de 400-600°C avant activation par gazéification en atmosphère oxydante (vapeur d'eau, CO₂, mélange H₂O/CO₂). Si le matériau hydrocarboné de départ est constitué de coques de fruits, par exemple coques de noix de coco, il n'est pas nécessaire de les mélanger avec du brai ou du goudron avant les étapes de dévolatilisation et d'activation car on obtient des grains dans la gamme de granulométrie souhaitée, par simple concassage, typiquement de l'ordre du mm.

En général, on préfère utiliser pour le traitement de liquides des granulés de l'ordre de 1mm de diamètre moyen, et pour le traitement de gaz des granulés (ou extrudés) de l'ordre d'au moins 3 mm de diamètre moyen.

A titre d'exemple en utilisant des charbons actifs en grains (granulés) à base de houille activés physiquement, ou en grains à base de bois activés chimiquement la quantité de tensioactif adsorbé est de l'ordre de 20 à 30g pour 100g de charbon actif.

Le charbon actif utilisé dans le lit (L2) pour traiter l'évent gazeux peut être du même type que celui utilisé dans le lit (L1) pour traiter la solution aqueuse.

**S'agissant de l'étape e)** La solution utilisée pour éluer le tensioactif adsorbé comprend avantageusement du méthanol et de l'acide sulfurique. De préférence elle comprend, en poids, 75 à 95% de méthanol, 5 à 15% d'acide sulfurique et 0 à 20% d'eau. Une composition particulièrement préférée comprend 89% de méthanol, 7,4% d'acide sulfurique et 3,6% d'eau. il est recommandé, après l'arrêt de la solution d'élution, de rincer le lit de charbon actif avec de l'eau pure. Cette étape permet de s'assurer qu'il n'y aura pas de petites pollutions par un résiduel de désorption au redémarrage de la colonne en adsorption. La quantité d'eau pure à utiliser est avantageusement au moins égale au volume du lit de charbon actif.

**S'agissant de l'étape f)** c'est le même traitement que pour les solutions recupérées quand on élue une résine échangeuse d'ions sur laquelle on a fait passer une solution identique à la solution de l'étape a1).

Cette technique est décrite dans les brevets US 4282162, US 5442097 et US 5591877. Elle consiste, s'agissant des tensioactifs dans lesquels M est l'ammonium, à faire l'estérification de la solution par le méthanol pour obtenir le méthylate, de le distiller, puis de faire l'hydrolyse ammoniacale pour retrouver l'APFO en solution.

### Exemples

### Exemple 1 :

On part d'une solution aqueuse issue d'un procédé de fabrication d'un polymère fluoré : celle-ci contient 54 mg/l de tensioactif perfluorooctanoate d'ammonium, 350mg/l de particules en suspension, et divers organiques exprimés en Demande Chimique en Oxygène (DCO) à environ 240mg/l.

Dans une fiole, on introduit 100ml de cette solution et 0,1 g de charbon actif en grains type GAC 1240 (à base de houille activé à la vapeur) préalablement réduit en poudre à moins de 80 µm ; on agite cette suspension pendant 4 heures puis on la filtre sur membrane 0,45µm.

Après filtration, la solution contient moins de 5mg/l de tensioactif fuoré (limite de détection basée sur le fluor ; en fait, on peuit préciser moins de 5 µg/l, lorsqu'on fait des analyses poussées par Chromatographie/spectrométrie de masse) et environ 220 mg/l de DCO. Celui-ci adsorbe donc bien sélectivement le tensioactif fluoré.

### Exemple 2 :

On procède à une saturation totale du charbon actif en grains (0,4-1.7mm) cité précédemment. 65g de ce charbon sont installés dans une colonne de 2cm de diamètre sur une hauteur de 49 cm. On traite la solution citée dans l'exemple 1 par coagulation avec 100mg/l de Claral (forme de polychlorure d'aluminium), puis floculation avec 5 mg/l de floculant cationique fort (EM840 L de Floerger), puis décantation ; ceci permet de réduire les matières en suspension à moins de 50 mg/l. On fait ensuite percoler cette solution au travers de la colonne à un débit moyen de 2 litres/h en prélevant des échantillons en sortie de colonne, jusqu'à ce que 308 litres soient passés.

Tous les échantillons en sortie de colonne jusqu'à 298 litres contiennent moins de 5mg/l de tensioactif fuoré (limite de détection basée sur le fluor). A 308 litres passés, la concentration est montée à 10mg/l. Ceci correspond à une capacité d'adsorption globale du charbon actif de 25% (g de tensioactif adsorbé pour 100g de charbon).

### Exemple 3 :

Avec des échantillons de charbon actif saturé issu de l'exemple 2, on procède à des essais de désorption : soit par chauffage à 160°C sous vide pendant 4 heures, soit par extraction par un liquide (5g de charbon dans 50 ml de liquide pendant 4h) puis séchage à 100°C. On procède ensuite au même essai simplifié que l'essai 1, à savoir 100 ml de solution en contact avec 0,1g de charbon désorbé. Les résultats en concentration de tensioactif après filtration sont les suivants :
Charbon neuf : < 5 mg/l (rappel exemple 1)
Charbon désorbé à 160°C : 12 mg/l
Charbon désorbé à l'acétate d'éthyle : 12 mg/l
Charbon désorbé au méthanol : 15 mg/l
Charbon désorbé à une solution méthanol 89%, H2SO4 7%, eau 4% : < 5 mg/l.

Seule la dernière méthode semble apte à désorber correctement le charbon actif pour qu'il retrouve son activité initiale.

### Exemple 4 :

On procède à plusieurs essais cycliques d'adsorption puis de désorption du charbon actif en grains mis en oeuvre en colonne comme dans l'exemple 2. Pour accélérer les essais, on part d'une solution contenant 500 mg/l de tensioactif fluoré. Pendant la phase d'adsorption, on continue la percolation jusqu'à la saturation quasi totale du charbon actif, c'est-à-dire jusqu'à ce que la concentration en tensioactif en sortie de colonne soit équivalente à celle entrante. La capacité résultante du charbon actif est calculée par bilan matière sur ce qui est resté dans la colonne. Pour la désorption, on injecte 800ml d'une solution méthanol 89%, H2SO4 7%, eau 4% (soit 5 volumes de colonne vide) à un débit de 1 litre/h, en recueillant les échantillons en sortie de colonne tous les 160ml. Une partie de ces échantillons se sépare en 2 phases liquides : l'une considérée comme du tensioactif pur, l'autre étant analysée en fluor total ; par calcul de bilan matière, on peut totaliser la quantité de tensioactif désorbé.

Ces essais ont été répétés sur 4 cycles avec les résultats suivants, exprimés en capacité (g de tensioactif pour 100g de charbon). :

| Adsorption 1 | Désorption 1 | Adsorption 2 | Désorption 2 | Adsorption 3 | Désorption 3 | Adsorption 4 |
|---|---|---|---|---|---|---|
| 27.1% | 29.5% | 26.7% | 26.8% | 28.9% | 28.2% | 25.5% |

On constate une bonne récupération du tensioactif et un maintient sur plusieurs cycles de la capacité du charbon actif (dans la limite de la précision des bilans matières). L'allure des profils de concentration (à l'adsorption et à la désorption) est globalement la même sur les différents cycles. Ceci démontre la possibilité d'utiliser facilement cette méthode industriellement sur un grand nombre de cycles. Cette méthode est a priori plus économique que celle utilisant des résines échangeuses d'ions plus onéreuses que le charbon actif.

## Revendications

1. Procédé de récupération de tensioactif fluoré présent soit dans une solution aqueuse soit dans un évent gazeux soit à la fois dans une solution aqueuse et dans un évent gazeux dans lequel :
a1) la solution aqueuse comprend :
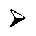 1 à 1000 ppm du tensioactif,
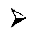 0 à 1000 ppm de solvants exprimé en DCO (demande chimique en oxygène),
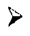 0 à 1000 ppm de solides en suspension,
a2) l'évent gazeux constitué essentiellement d'air comprend :
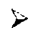 1 à 1000 ppm de tensioactif,
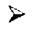 1 à 10 % volumique d'eau,
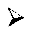 1 à 1000 ppm de solides,
b1) la solution de l'étape a1) est filtrée et/ou clarifiée pour éliminer les solides en suspension,
b2) l'évent de l'étape a2) est éventuellement passé dans un filtre pour éliminer les particules solides,
c1) la solution de l'étape b1) est éventuellement concentrée,
d) puis la solution aqueuse passe sur un lit fixe (L1) de charbon actif en granulés tel que tout le tensioactif est adsorbé sur (L1) sans que les solvants ne soient adsorbés, l'évent gazeux sur un autre lit fixe (L2) de charbon actif en granulés tel que tout le tensioactif est adsorbé sur (L2),
e) puis on arrête le passage de la solution sur (L1), et de l'évent gazeux sur (L2) et on élue (L1) et (L2) avec une solution comprenant un solvant et un acide minéral,
f) puis cette solution récupérée à l'étape e) est traitée pour régénérer le tensioactif fluoré.

2. Procédé selon la revendication 1 dans lequel le tensioactif est de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

3. Procédé selon l'une quelconque des revendications précédentes dans lequel la concentration du tensioactif dans la solution a1) est comprise entre 10 et 200 ppm.

4. Procédé selon l'une quelconque des revendications précédentes dans lequel la concentration des solvants dans la solution a1) est comprise entre 0 et 500 ppm.

5. Procédé selon l'une quelconque des revendications précédentes dans lequel la teneur des solides en suspension dans la solution a1) est comprise entre 0 et 500 ppm.

6. Procédé selon l'une quelconque des revendications précédentes dans lequel la solution d'élution comprend, en poids, 75 à 95% de méthanol, 5 à 15% d'acide sulfurique et 0 à 20% d'eau.

## Claims

1. Process for the recovery of a fluorosurfactant present either in an aqueous solution or in a gaseous effluent or in both an aqueous solution and a gaseous effluent, in which:
a1) the aqueous solution comprises:
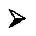 1 to 1 000 ppm of surfactant,
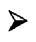 0 to 1 000 ppm of solvents, expressed in COD (chemical oxygen demand),
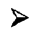 0 to 1 000 ppm of suspended solids,
a2) the gaseous effluent, composed essentially of air, comprises:
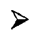 1 to 1000 ppm of surfactant,
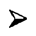 1 to 10% by volume of water,
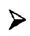 1 to 1 000 ppm of solids,
b1) the solution from stage a1) is filtered and/or clarified to remove the suspended solids,
b2) the effluent from stage a2) is optionally passed into a filter to remove the solid particles,
c1) the solution from stage b1) is optionally concentrated,
d) then the aqueous solution passes over a stationary bed (B1) of granular active charcoal such that all the surfactant is adsorbed on (B1) without the solvents being adsorbed, the gaseous effluent over another stationary bed (B2) of granular active charcoal such that all the surfactant is adsorbed on (B2),
e) then the passage of the solution over (B1) and the passage of the gaseous effluent over (B2) are halted and (B1) and (B2) are eluted with a solution comprising a solvent and an inorganic acid,
f) then this solution recovered in stage e) is treated to regenerate the fluorosurfactant.

2. Process according to Claim 1, in which the surfactant is of general formula: ZCₙF₂ₙCOOM, in which Z is a fluorine or chlorine atom, n is an integer with a value from 6 to 13 and M is a hydrogen or alkali metal atom or an ammonium group or an ammonium group comprising at least one lower alkyl substituent.

3. Process according to any one of the preceding claims, in which the concentration of the surfactant in the solution a1) is between 10 and 200 ppm.

4. Process according to any one of the preceding claims, in which the concentration of the solvents in the solution a1) is between 0 and 500 ppm.

5. Process according to any one of the preceding claims, in which the content of the suspended solids in the solution a1) is between 0 and 500 ppm.

6. Process according to any one of the preceding claims, in which the elution solution comprises, by weight, 75 to 95% of methanol, 5 to 15% of sulphuric acid and 0 to 20% of water.

## Patentansprüche

1. Verfahren zur Rückgewinnung von Fluortensid, das in einer wäßrigen Lösung oder in einem Gasaustrag oder sowohl in einer wäßrigen Lösung als auch in einem Gasaustrag vorliegt, bei dem:
a1) die wäßrige Lösung:
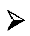 1 bis 1000 ppm Tensid,
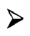 0 bis 1000 ppm Lösungsmittel, ausgedrückt in CSB (chemischer Sauerstoffbedarf),
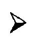 0 bis 1000 ppm suspendierte Feststoffe enthält,
a2) der Gasaustrag im wesentlichen aus Luft, die
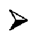 1 bis 1000 ppm Tensid,
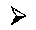 1 bis 10 Vol.-% Wasser,
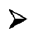 1 bis 1000 ppm Feststoffe enthält, besteht,
b1) die Lösung aus Stufe a1) zur Entfernung der suspendierten Feststoffe filtriert und/oder geklärt wird,
b2) der Austrag aus Stufe a2) gegebenenfalls zur Entfernung von festen Teilchen durch ein Filter geleitet wird,
c1) die Lösung aus Stufe b1) gegebenenfalls aufkonzentriert wird,
d) dann die wäßrige Lösung derart über ein Aktivkohlegranulat-Festbett (L1) geleitet wird, daß das Tensid an (L1) adsorbiert wird, ohne daß die Lösungsmittel adsorbiert werden, der Gasaustrag derart über ein anderes Aktivkohlegranulat-Festbett (L2) geleitet wird, daß das Tensid an (L2) adsorbiert wird,
e) dann das Überleiten der Lösung über (L1) und des Gasaustrags über (L2) eingestellt wird und (L1) und (L2) mit einer ein Lösungsmittel und eine Mineralsäure enthaltenden Lösung eluiert werden und
f) dann diese in Stufe e) gewonnene Lösung zur Regeneration des Fluortensids behandelt wird.

2. Verfahren nach Anspruch 1, bei dem das Tensid die allgemeine Formel ZCₙF₂ₙCOOM, worin Z für ein Fluor- oder Chloratom steht, n für eine ganze Zahl mit einem Wert von 6 bis 13 steht und M für ein Wasserstoff- oder Alkalimetallatom oder eine Ammoniumgruppe, die gegebenenfalls mindestens einen Niederalkylsubstituenten enthält, steht, aufweist.

3. Verfahren nach einem der vorhergehenden Ansprüche, bei dem die Konzentration des Tensids in der Lösung a1) zwischen 10 und 200 ppm liegt.

4. Verfahren nach einem der vorhergehenden Ansprüche, bei dem die Konzentration der Lösungsmittel in der Lösung a1) zwischen 0 und 500 ppm liegt.

5. Verfahren nach einem der vorhergehenden Ansprüche, bei dem der Gehalt der suspendierten Feststoffe in der Lösung a1) zwischen 0 und 500 ppm liegt.

6. Verfahren nach einem der vorhergehenden Ansprüche, bei dem die Elutionslösung 75 bis 95 Gew.-% Methanol, 5 bis 15 Gew.-% Schwefelsäure und 0 bis 20 Gew.-% Wasser enthält.
